# EUROPEAN PATENT APPLICATION

(11) **EP 2 928 246 A1**
(43) Date of publication of application: **07.10.2015**
(21) Application number: 12889480.5
(22) Date of filing: 03.12.2012
(51) Int. Cl.: H04W 72/04, H04W 16/10, H04W 36/06

(54) **MACHINE-TYPE COMMUNICATION RESOURCE CONFIGURATION METHOD AND DEVICE**

(71) Applicant: Fujitsu Limited, Kawasaki-shi, Kanagawa 211-8588 (JP)
(72) Inventor: WANG, Yi, Beijing 100025 (CN); XU, Yueqiao, Beijing 100025 (CN); CHANG, Ningjuan, Beijing 100025 (CN)
(74) Representative: Fenlon, Christine Lesley
(86) International application number: PCT/CN2012/085754
(87) International publication number: WO 2014/085966

(57) **Abstract**

Embodiments of the present invention provide a method and apparatus for configuring resource of machine-type communication. The method includes: allocating a frequency domain resource by an eNB for MTC UE accessed into the eNB; and transmitting RRC signaling by the eNB to the MTC UE according to the frequency domain resource allocated for the MTC UE, so that the MTC UE determines to perform conventional cell handover or frequency domain resource adjustment according to the RRC signaling. With the method and apparatus of the embodiments of the present invention, the MTC UE may be supported to be quickly handed over to an operating frequency configured by the eNB for it, and normal communication may be performed.

## Description

### Technical Field

The present invention relates to the field of communications, and in particular to a method and apparatus for configuring resource for machine-type communication (MTC) user equipment (UE) in wireless communication system.

### Background Art

In long-term evolution (LTE) Release 11, 3GPP RAN started a study item (SI) of RAN enhancement of MTC, and concluded the work in TR 37.868. In TR 37.868, traffic characteristics and models in different M2M (machine-to-machine) application scenarios are mainly studied, as shown in Table 1 below.

**Table 1**

| **Characteristics** | **Traffic model 1** | **Traffic model 2** |
|---|---|---|
| Number of MTC devices | 1000, 3000, 5000, 10000,30000 | 1000, 3000, 5000, 10000, 30000 |
| Arrival distribution | Uniform distribution over T | Beta distribution over T |
| Distribution period (T) | 60 seconds | 10 seconds |

And 3GPP RANI gives various technologies that can be used by low-cost MTC UE in TR 36.888, including reduction of maximum bandwidth, single receive RF chain, reduction of peak rate, reduction of transmit power, half duplex operation, and reduction of supported downlink transmission modes, etc.

Wherein, for a downlink, the reduction of maximum bandwidth may be divided into: reduction of both an RF and a baseband bandwidth; reduction of only a baseband bandwidth, but a baseband bandwidth of a data channel and a baseband bandwidth of a control channel are both reduced; and a baseband bandwidth of a data channel is only reduced, while a baseband bandwidth of a control channel is identical to a carrier system bandwidth.

Wherein, for an uplink, the reduction of maximum bandwidth may be divided into: reduction of both an RF and a baseband bandwidth; and bandwidths are unchanged.

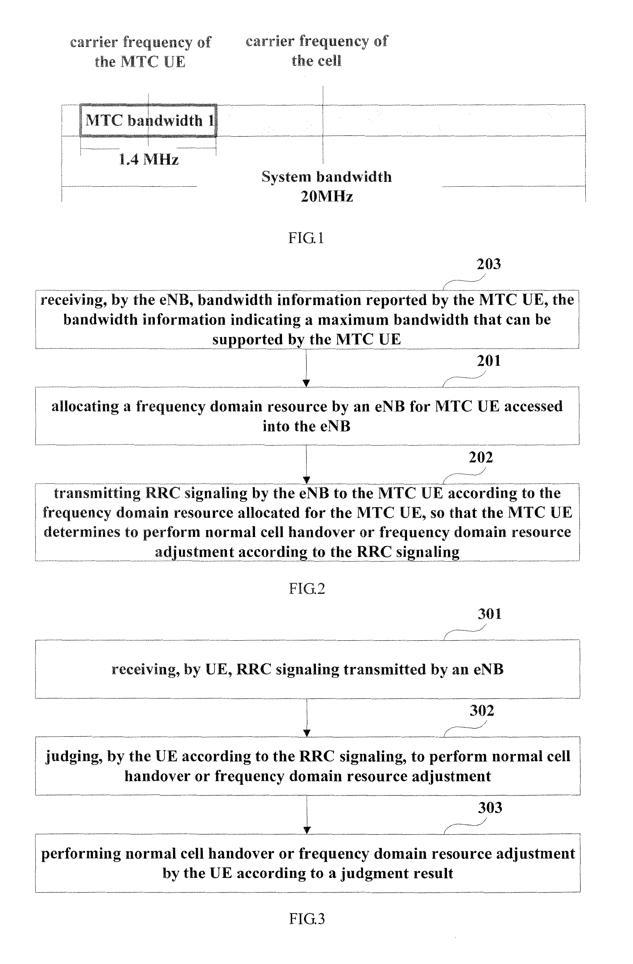

For MTC UE of which both an RF and a baseband bandwidth are reduced or a baseband bandwidth is reduced but a baseband bandwidth of a data channel and a baseband bandwidth of a control channel are both reduced, signals transmitted on the whole carrier system bandwidth cannot be completely acquired, and only part of the signals on a bandwidth supported by the MTC UE may be acquired, which may be still unable to be correctly solved. For example, if the system bandwidth is 20 MHz, and the maximum number of available resource blocks (RBs) is 110, while the bandwidth supported by the MTC UE is 1.4 MHz, and the maximum number of available resource blocks (RBs) is 6, this UE may only receive signals of 6 RBs. These 6 RBs may be located at the center of the carrier system bandwidth, and may also be located anywhere in the carrier system bandwidth, as shown in Figure 1. As cell detection of UE is achieved by detecting a primary synchronization signal (PSS), a secondary synchronization signal (SSS) and a physical broadcast channel (PBCH) at a center of a detected carrier, the MTC UE must access into the carrier first successfully, hence, after accessing into the carrier, an operating frequency of the MTC UE is aligned with a carrier central frequency point. If the 1.4 MHz bandwidth supported by the UE is at a non-center position, according to an existing mechanism, the UE needs to perform cell handover, so as to be handed over to a new central frequency point where it is present, and detaches all connection with the source carrier, releases all resource configuration on the source carrier.

However, in the implementation of the present invention, the inventors found that for such type of MTC UE, tedious cell handover results in large waste of system resources, and release of all resource configuration on the carrier may also result in that the MTC UE cannot operate normally.

It should be noted that the above description of the background art is merely provided for clear and complete explanation of the present invention and for easy understanding by those skilled in the art. And it should not be understood that the above technical solution is known to those skilled in the art as it is described in the background art of the present invention.

### Summary of the Invention

An object of the embodiments of the present invention is to provide a method and apparatus for configuring resource of machine-type communication, so as to support MTC UE to be quickly handed over to an operating frequency configured by an eNB for it, and may perform normal communication.

According to a first aspect of the embodiments of the present invention, there is provided a method for configuring resource of machine-type communication, including:
allocating a frequency domain resource by an eNB for MTC UE accessed into the eNB; and
transmitting RRC signaling by the eNB to the MTC UE according to the frequency domain resource allocated for the MTC UE, so that the MTC UE determines to perform conventional cell handover or frequency domain resource adjustment according to the RRC signaling.

According to a second aspect of the embodiments of the present invention, there is provided a method for configuring resource of machine-type communication, including:
receiving, by UE, RRC signaling transmitted by an eNB;
judging, by the UE according to the RRC signaling, whether to perform conventional cell handover or frequency domain resource adjustment; and
performing conventional cell handover or frequency domain resource adjustment by the UE according to a judgment result.

According to a third aspect of the embodiments of the present invention, there is provided an eNB, including:
an allocating unit configured to allocate a frequency domain resource for MTC UE accessed into the eNB; and
a transmitting unit configured to transmit RRC signaling to the MTC UE according to the frequency domain resource allocated for the MTC UE, so that the MTC UE determines to perform conventional cell handover or frequency domain resource adjustment according to the RRC signaling.

According to a fourth aspect of the embodiments of the present invention, there is provided machine-type communication user equipment (MTC UE), including:
a receiving unit configured to receive RRC signaling transmitted by an eNB;
a judging unit configured to judge to perform conventional cell handover or frequency domain resource adjustment according to the RRC signaling; and
a processing unit configured to perform conventional cell handover or frequency domain resource adjustment according to a judgment result of the judging unit.

According to a fifth aspect of the embodiments of the present invention, there is provided a method for configuring resource of machine-type communication, including:
transmitting RRC signaling to MTC UE after the MTC UE accesses into an eNB, so that the MTC UE adjusts its operating frequency or adjusts a frequency domain position of its baseband for receiving data according to the RRC signaling;
wherein the RRC signaling includes operating frequency indication information, the operating frequency indication information being used for indicating an operating frequency of the MTC UE, or the RRC signaling includes frequency domain position indication information, the frequency domain position indication information being used for indicating a frequency domain position of a baseband for receiving data of the MTC UE.

According to a sixth aspect of the embodiments of the present invention, there is provided a method for configuring resource of machine-type communication, including:
after MTC UE accesses into an eNB, if RRC signaling transmitted by the eNB is received, adjusting, by the MTC UE according to the RRC signaling, its operating frequency or a frequency domain position of its baseband for receiving data;
wherein the RRC signaling includes operating frequency indication information or frequency domain position indication information, the operating frequency indication information being used for indicating an operating frequency of the MTC UE, and the frequency domain position indication information being used for indicating a frequency domain position of a baseband for receiving data of the MTC UE.

According to a seventh aspect of the embodiments of the present invention, there is provided an eNB, including:
a transmitting unit configured to transmit RRC signaling to MTC UE after the MTC UE accesses into the eNB, so that the MTC UE adjusts its operating frequency or adjusts a frequency domain position of its baseband for receiving data according to the RRC signaling;
wherein the RRC signaling includes operating frequency indication information, the operating frequency indication information being used for indicating an operating frequency of the MTC UE, or the RRC signaling includes frequency domain position indication information, the frequency domain position indication information being used for indicating a frequency domain position of a baseband for receiving data of the MTC UE.

According to an eighth aspect of the embodiments of the present invention, there is provided machine-type communication user equipment, including:
a processing unit configured to, after the MTC UE accesses into an eNB, when RRC signaling transmitted by the eNB is received, adjust its operating frequency or a frequency domain position of its baseband for receiving data according to the RRC signaling;
wherein the RRC signaling includes operating frequency indication information or frequency domain position indication information, the operating frequency indication information being used for indicating an operating frequency of the MTC UE, and the frequency domain position indication information being used for indicating a frequency domain position of a baseband for receiving data of the MTC UE.

According to a ninth aspect of the embodiments of the present invention, there is provided a method for managing frequency domain resource of MTC, including:
receiving, by an eNB, a maximum bandwidth that can be supported by MTC UE reported by the MTC UE; and
performing frequency domain resource management by the eNB according to the maximum bandwidth that can be supported by the MTC UE.

According to a tenth aspect of the embodiments of the present invention, there is provided a method for managing frequency domain resource of MTC, including:
transmitting, by MTC UE to an eNB, a maximum bandwidth that can be supported by the MCT UE, so that the eNB performs frequency domain resource management according to the maximum bandwidth that can be supported by the MTC UE.

According to an eleventh aspect of the embodiments of the present invention, there is provided an eNB, including:
a receiving unit configured to receive a maximum bandwidth that can be supported by MTC UE reported by the MTC UE; and
a managing unit configured to perform frequency domain resource management according to the maximum bandwidth that can be supported by the MTC UE.

According to a twelfth aspect of the embodiments of the present invention, there is provided UE, including:
a transmitting unit configured to transmit to an eNB, a maximum bandwidth that can be supported by the UE, so that the eNB performs frequency domain resource management according to the maximum bandwidth that can be supported by the UE.

According to a thirteenth aspect of the embodiments of the present invention, there is provided a communication system, including the eNB as described in the third aspect and the UE as described in the fourth aspect, or including the eNB as described in the seventh aspect and the UE as described in the eighth aspect, or including the eNB as described in the eleventh aspect and the UE as described in the twelfth aspect.

According to a fourteenth aspect of the embodiments of the present invention, there is provided a computer-readable program, wherein when the program is executed in an eNB, the program enables a computer to carry out the method for configuring resource of machine-type communication as described in the first or fifth aspect in the eNB, or the program enables a computer to carry out the method for managing frequency domain resource of MTC as described in the ninth aspect in the eNB.

According to a fifteenth aspect of the embodiments of the present invention, there is provided a storage medium in which a computer-readable program is stored, wherein the computer-readable program enables a computer to carry out the method for configuring resource of machine-type communication as described in the first or fifth aspect in an eNB, or the program enables a computer to carry out the method for managing frequency domain resource of MTC as described in the ninth aspect in an eNB.

According to a sixteenth aspect of the embodiments of the present invention, there is provided a computer-readable program, wherein when the program is executed in terminal equipment, the program enables a computer to carry out the method for configuring resource of machine-type communication as described in the second or sixth aspect in the terminal equipment, or the program enables a computer to carry out the method for managing frequency domain resource of MTC as described in the tenth aspect in the terminal equipment.

According to a seventeenth aspect of the embodiments of the present invention, there is provided a storage medium in which a computer-readable program is stored, wherein the computer-readable program enables a computer to carry out the method for configuring resource of machine-type communication as described in the second or sixth aspect in terminal equipment, or the program enables a computer to carry out the method for managing frequency domain resource of MTC as described in the tenth aspect in terminal equipment.

An advantage of the embodiments of the present invention exists in that with the method and apparatus of the embodiments of the present invention, the MTC UE may be supported to be quickly handed over to an operating frequency configured by the eNB for it, and normal communication may be performed.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention include many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be enlarged or reduced. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiments. In the drawings:
Figure 1 is a schematic diagram of a position of a carrier resource of MTC UE on a carrier system bandwidth;
Figure 2 is a flowchart of a method for configuring resource of MTC of an embodiment of modifying a handover command;
Figure 3 is a flowchart of a method for configuring resource of MTC of another embodiment of modifying a handover command;
Figure 4 is a flowchart of handover after modifying a handover command;
Figure 5 is a schematic diagram of the structure of an eNB corresponding to the embodiment shown in Fig. 2;
Figure 6 is a schematic diagram of the structure of UE corresponding to the embodiment shown in Fig. 3;
Figure 7 is a flowchart of a method for configuring resource of MTC of an embodiment of adding RRC signaling;
Figure 8 is a flowchart of a method for configuring resource of MTC of another embodiment of adding RRC signaling;
Figure 9 is a schematic diagram of the structure of an eNB corresponding to the embodiment shown in Fig. 7;
Figure 10 is a schematic diagram of the structure of UE corresponding to the embodiment shown in Fig. 8;
Figure 11 is a flowchart of a method for managing resource of MTC of an embodiment of the present invention;
Figure 12 is a flowchart of a method for managing resource of MTC of another embodiment of the present invention;
Figure 13 is a schematic diagram of the structure of an eNB corresponding to the embodiment shown in Fig. 11; and
Figure 14 is a schematic diagram of the structure of UE corresponding to the embodiment shown in Fig. 12.

### Detailed Description of the Invention

The foregoing and other features of the embodiments of the present invention shall become apparent with reference to the drawings and the following description. These embodiments are illustrative only, and are not intended to limit the present invention.

### Embodiment 1

An embodiment of the present invention provides a method for configuring resource of machine-type communication. Fig. 2 is a flowchart of the method. Referring to Fig. 2, the method includes:
step 201: allocating a frequency domain resource by an eNB for MTC UE accessed into the eNB; and
step 202: transmitting RRC signaling by the eNB to the MTC UE according to the frequency domain resource allocated for the MTC UE, so that the MTC UE determines to perform conventional cell handover or frequency domain resource adjustment according to the RRC signaling.

In step 201, the frequency domain resource includes a carrier frequency resource and a bandwidth resource. As described in the Background Art, in order to support low-cost MTC, a maximum bandwidth may be reduced, and after the bandwidth is reduced, an operating frequency or a frequency domain location and an operational bandwidth of the MTC UE may be changed. Therefore, in this embodiment of the present invention, the frequency domain resource is re-allocated by the eNB for the MTC UE.

In an implementation of step 201, the eNB may decide the frequency domain resource allocated for the MTC UE according to a measurement result of the MTC UE; that is, the eNB determines the frequency domain resource of the MTC UE according to the measurement result of the MTC UE. At this moment, the eNB will configure the MTC UE to perform cell measurement (such as transmitting measurement control information to the MTC UE), and allocate an uplink resource for the MTC UE (such as transmitting UL allocation information to the MTC UE), so that it reports a measurement result (measurement report). And the eNB decides the frequency domain resource allocated for the MTC UE according to the measurement result of the MTC UE, and indicates the information to the MTC UE by adding a new field in the RRC signaling, so that the MTC UE performs conventional cell handover or frequency domain resource adjustment according to the new field.

In another implementation of step 201, the eNB may not configure the MTC UE to perform related measurement, but decides on its own the frequency domain resource that will be allocated for the MTC UE. For example, the eNB may decide the frequency domain resource allocated for the MTC UE according to a scheduling situation, and a load, etc., of itself.

In an implementation of the embodiment of the present invention, the method may further include a step of:
step 203: receiving, by the eNB, bandwidth information reported by the MTC UE, the bandwidth information indicating a maximum bandwidth supported by the MTC UE.

In this implementation, the MTC UE may also report the maximum bandwidth it can support to the eNB, so that the eNB allocates the operational bandwidth for the MTC UE with reference to the bandwidth information reported by the MTC UE in allocating the frequency domain resource for the MTC UE in step 201. Preferably, the operational bandwidth allocated by the eNB for the MTC UE is not greater than the supported maximum bandwidth that is reported by the MTC UE.

In this implementation, an order of executing steps 203, 201 and 202 is not limited. For example, step 203 may be executed before step 201, and may also be executed between steps 201 and 202. Preferably, step 203 is executed before step 201.

In step 202, if a central frequency of the frequency domain resource allocated by the eNB for the MTC UE (operating frequency or a central of the frequency domain location) is not a central frequency of a system bandwidth, the eNB transmits the RRC signaling including handover indication to the MTC UE, or transmits RRC signaling including handover indication with a value of handover indication being a first specific value to the MTC UE, so that the MTC UE determines to perform frequency domain resource adjustment according to the RRC signaling. And if the central frequency of the frequency domain resource allocated by the eNB for the MTC UE (operating frequency or a central of the frequency domain location) is the central frequency of the system bandwidth, the eNB transmits RRC signaling not including the handover indication to the MTC UE, or transmits RRC signaling including handover indication with a value of handover indication being a second specific value to the MTC UE, so that the MTC UE determines to perform conventional cell handover according to the RRC signaling.

That is,
in an implementation of step 202, the eNB indicates to the MTC UE whether the handover command (the RRC signaling) is conventional handover or a frequency domain resource change within the cell system bandwidth by whether adding a new field (referred to as "handover indication" in this embodiment, the same below) into the RRC signaling; for example, if a new field is added into the RRC signaling, it shows that the handover command is a frequency domain resource change within the cell system bandwidth, and the MTC UE performs frequency domain resource adjustment according to the RRC signaling; and if a new field is not added into the RRC signaling, it shows that the handover command is conventional handover, and the MTC UE performs conventional cell handover according to the RRC signaling;
in another implementation of step 202, the eNB indicates to the MTC UE whether the handover command (the RRC signaling) is conventional handover or a frequency domain resource change within the cell system bandwidth by a value of a new field added into the RRC signaling. For example, if the value of the new field is a first specific value (such as "1"), it shows that the handover command is a frequency domain resource change within the cell system bandwidth, and the MTC UE performs frequency domain resource adjustment according to the RRC signaling; and if the value of the new field is a second specific value (such as "0" or a default value), it shows that the handover command is conventional handover, and the MTC UE performs conventional cell handover according to the RRC signaling.

In this embodiment, the handover indication may be carried via a *MobilityControlInfo* information element of the RRC signaling. And the *MobilityControlInfo* information element may further include a carrier frequency resource and a bandwidth resource allocated for the MTC UE, so that the MTC UE performs frequency domain resource adjustment accordingly.

Following are examples of contents included in the *MobilityControlInfo* information element according to an implementation of the embodiment of the present invention:

```
 -- ASN1START
 MobilityControlInfo ::= SEQUENCE {
  targetPhysCellId PhysCellId,
  carrierFreq CarrierFreqEUTRA OPTIONAL,
  -- Cond HO-toEUTRA
  carrierBandwidth CarrierBandwidthEUTRA OPTIONAL,
  -- Cond HO-toEUTRA
  additionalSpectrumEmission AdditionalSpectrumEmission OPTIONAL,
  -- Cond HO-toEUTRA
  t304 ENUMERATED {
                                      ms50, ms100, ms150, ms200, ms500, ms1000,
                                      me2000, spare1},
  newUE-Identity C-RNTI,
  radioResourceConfigCommon RadioResourceConfigCommon,
  rach-ConfigDedicated RACH-ConfigDedicated OPTIONAL,
  -- Need OP
  New indication Frequencylocationflag OPTIONAL,
  -- Need OP
  }
  CarrierBandwidthEUTRA ::= SEQUENCE {
  dl-Bandwidth ENUMERATED {
                                          n6, n15, n25, n50, n75, n100, spare10,
                                          spare9, spare8, spare7, spare6, spare5,
                                          spare4, spare3, spare2, spare1},
  ul-Bandwidth ENUMERATED {
                                          n6, n15, n25, n50, n75, n100, spare10,
                                          spare9, spare8, spare7, spare6, spare5,
                                          spare4, spare3, spare2, spare1}
  OPTIONAL -- Need OP
  }
  CarrierFreqEUTRA ::= SEQUENCE {
  dl-CarrierFreq ARFCN-ValueEUTRA,
   ul-CarrierFreq ARFCN-ValueEUTRA OPTIONAL --
   Cond FDD
   }
  -- ASN1STOP
```

Wherein, "new indication" is the new field (referred to as a newly-added field) added into the *MobilityControlInfo* information element of the RRC signaling of the embodiment of the present invention, which indicates via "frequencylocationflag" whether conventional handover or frequency domain resource adjustment is performed.

The eNB allocates a frequency domain resource for the MTC UE by using the method of this embodiment, and the MTC UE may be quickly handed over to an operating frequency configured by the eNB for it, and normal communication may be performed.

### Embodiment 2

An embodiment of the present invention further provides a method for configuring resource of machine-type communication. Fig. 3 is a flowchart of the method. Referring to Fig. 3, the method includes:
step 301: receiving, by UE, RRC signaling transmitted by an eNB;
step 302: judging, by the UE according to the RRC signaling, whether to perform conventional cell handover or frequency domain resource adjustment; and
step 303: performing conventional cell handover or frequency domain resource adjustment by the UE according to a judgment result.

In step 301, the RRC signaling transmitted by the eNB to the UE is identical to that in Embodiment 1, the contents of which being incorporated herein, which shall not be described any further.

In step 302, as the RRC signaling transmitted by the eNB to the MTC UE may include information indicating the MTC UE to perform frequency domain resource adjustment (i.e. the handover indication or the handover indication having the first specific value described in Embodiment 1), after receiving the RRC signaling, the MTC UE will determine whether the handover command (the RRC signaling) is conventional handover or a frequency domain resource change within the cell system bandwidth according to the RRC signaling.

Wherein, if the RRC signaling includes the handover indication or the RRC signaling includes the handover indication having the first specific value, it is judged in step 302 that the handover command is the frequency domain resource adjustment, and in step 303, the MTC UE performs the frequency domain resource adjustment according to the RRC signaling.

Wherein, if the RRC signaling does not inlcude the handover indication or the RRC signaling includes the handover indication having the second specific value, it is judged in step 302 that the handover command is the conventional cell handover, and in step 303, the MTC UE performs the conventional cell handover according to the RRC signaling.

In another implementation of this embodiment, corresponding to the method of Embodiment 1, the eNB will configure the MTC UE to perform cell measurement, so as to allocate the frequency domain resource for the MTC UE according to the measurement result, and the UE may further perform cell measurement according to the measurement request of the eNB and report a measurement result.

In a further implementation of this embodiment, corresponding to the method of Embodiment 1, the UE may further report the maximum bandwidth that can be supported by it to the eNB, so that the eNB allocates the operational bandwidth for the MTC UE with reference to the bandwidth information reported by the MTC UE.

Similar to Embodiment 1, in this embodiment, the handover indication may be carried via a *MobilityControlInfo* information element in the above RRC signaling, and the *MobilityControlInfo* information element may further include a carrier frequency resource and a bandwidth resource allocated for the MTC UE, so that the MTC UE performs frequency domain resource adjustment accordingly.

Wherein, when the UE performs the frequency domain resource adjustment according to the RRC signaling, for the MTC UE in the manner of reduction of the maximum bandwidth mentioned in the Background Art with the RF and baseband bandwidths being both reduced, the MTC UE may adjust its operating frequency according to the carrier frequency resource, and determine its operational bandwidth according to the bandwidth resource; and for the MTC UE in the manner of reduction of the maximum bandwidth mentioned in the Background Art with the baseband bandwidth being reduced but the baseband bandwidth of the data channel and the baseband bandwidth of the control channel being both reduced, the MTC UE may adjust the frequency domain location of the baseband for receiving data according to the carrier frequency resource, and determine its operational bandwidth according to the bandwidth resource.

In an embodiment, as the frequency domain resource adjustment is performed, the MTC UE will not perform random access on its own, and will not release all configuration resource information of a source serving cell (the original frequency domain resource). That is, the MTC UE will reserve a part of the configuration resource information of the source serving cell (the original frequency domain resource).

Preferably, the MTC UE may reserve *N_{TA}* (time advance) information. That is, after being adjusted to a new frequency domain resource, initial downlink timing used by the MTC UE is downlink timing obtained by it in the original frequency domain resource, and downlink timing tracking is performed according to a pilot symbol in the new frequency domain resource; initial uplink timing used by the MTC UE is uplink timing obtained by it in the original frequency domain resource, that is, a time advanced by *N_{TA}* sampling points is taken as an uplink transmission time taking a time point of a detected first downlink path ("path" refers to a path in multipath time delay of a channel) as a reference point; where, *N_{TA}* is uplink timing information obtained by the MTC UE in the original frequency domain resource, and the MTC UE updates subsequent uplink timing according to a received uplink timing adjustment command.

Preferably, the MTC UE may reserve radio resource common configuration (radioResourceConfigCommon) information and random access dedicated configuration (rach-ConfigDedicated) information.

Wherein, after the frequency domain resource is adjusted, the above configuration resource information reserved by the MTC UE is an example only, and this embodiment is not limited thereto. For example, the MTC UE may also reserve other information, so as to perform normal communication, etc.

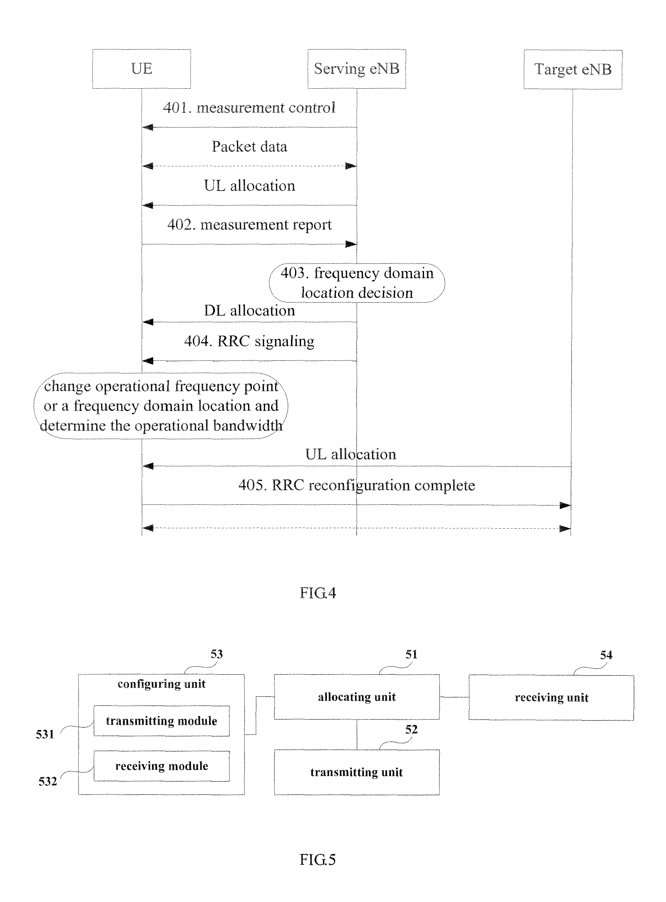

In an embodiment, the MTC UE will still be in RRC connection with the source serving cell. A modified flowchart is as shown in Fig. 4, and includes the steps of:
step 401: the serving eNB (serving cell) transmits measurement control to the UE;
step 402: the UE reports a measurement result (measurement report) to the serving eNB;
   wherein, the UE performs cell measurement according to the measurement control and reports a measurement result;
   wherein, the measurement result is transmitted in an uplink resource allocated by the serving eNB for it;
step 403: the serving eNB determines frequency domain resource (frequency domain location decision) of the UE according to the measurement result;
   wherein, as described above, the eNB may determine the frequency domain resource configured for the MTC UE on its own with no reference to the measurement result reported by the MTC UE; that is, steps 401 and 402 may be omitted;
   wherein, as described above, the eNB may determine the operational bandwidth allocated for the UE with reference to the bandwidth information reported by the UE;
step 404: the sieving eNB transmits RRC signaling (RRC Conn. Reconf. Incl.) to the UE, the RRC signaling including mobility control information;
   wherein, the RRC signaling is transmitted in a downlink resource allocated by the serving eNB;
   wherein, the UE changes the frequency domain resource according to the RRC signaling; for example, changes from a central frequency of a cell to a dedicated carrier frequency (an operating frequency or a frequency domain location);
step 405: the UE transmits RRC reconfiguration completion information to a target eNB (target cell);
   wherein, the target eNB is not a real target eNB, but a new frequency resource within a bandwidth of the serving eNB;
   wherein, the RRC reconfiguration completion information is transmitted in an uplink resource configured by the target eNB for the UE.

In this embodiment, whether the MTC UE performs downlink synchronization is not limited, and it may be determined according to an actual situation.

In a preferred embodiment, after the UE adjusts the frequency domain resource, part of the configured information less contributing to the normal communication may be removed, such as cell ID of the target cell (targetcellID), additional spectrum emission (additionalSpectrumEmission), and new UE ID (newUE-Identity), etc.

In a preferred embodiment, the radio resource common configuration (radioResourceConfigCommon) and the random access dedicated configuration (rach-ConfigDedicated) may be removed too.

With the method of this embodiment, the MTC UE may be quickly handed over to an operating frequency configured by the eNB for it, and may perform communication using the parameters configured by the source serving eNB for it.

An embodiment of the present invention further provides an eNB, as described in Embodiment 3 below. As the principle of the eNB for solving problems is similar to that of the method in Embodiment 1, the implementation of the method in Embodiment 1 may be referred to for the implementation of the eNB, and repeated parts shall not be described herein any further.

### Embodiment 3

An embodiment of the present invention further provides an eNB. Fig. 5 is a schematic diagram of the structure of the eNB. Referring to Fig. 5, the eNB includes:
an allocating unit 51 configured to allocate a frequency domain resource for MTC UE accessed into the eNB; and
a transmitting unit 52 configured to transmit RRC signaling to the MTC UE according to the frequency domain resource allocated for the MTC UE, so that the MTC UE determines to perform conventional cell handover or frequency domain resource adjustment according to the RRC signaling.

In an implementation of this embodiment, the eNB further includes:
a configuring unit 53 configured to configure the MTC UE to perform cell measurement, so that the allocating unit 51 determines the frequency domain resource allocated for the MTC UE according to a measurement result of the MTC UE, that is, determining an frequency domain resource operated by the MTC UE. In an embodiment, the configuring unit 53 may include a transmitting module 531 and a receiving module 532, the transmitting module 531 being configured to transmit a measurement request to the MTC UE, and the receiving module 532 being configured to receive the measurement result of the MTC UE.

In another implementation of this embodiment, the eNB may hand over blindly; that is, it decides the frequency domain resource for scheduling the MTC UE on its own without measurement result. For example, it may decide on its own the frequency domain resource allocated for the MTC UE only according to a scheduling situation or a load of itself.

In a further implementation of this embodiment, the eNB includes:
a receiving unit 54 configured to receive bandwidth information reported by the MTC UE, the bandwidth information indicating a maximum bandwidth that can be supported by the MTC UE, so that the allocating unit 51 allocates an operational bandwidth for the MTC UE with reference to the bandwidth information.

The above three implementations are examples only, and in particular implementation, they may be combined in use, and this embodiment is not limited thereto.

In an implementation of this embodiment, when a central frequency of the frequency domain resource allocated by the eNB for the MTC UE is not a central frequency of a system bandwidth, the transmitting unit 52 transmits a handover indication to the MTC UE via the RRC signaling, or transmits handover indication with a value of handover indication being a first specific value to the MTC UE via the RRC signaling, so that the MTC UE performs frequency domain resource adjustment according to the RRC signaling. And when the central frequency of the frequency domain resource allocated by the eNB for the MTC UE is the central frequency of the system bandwidth, the transmitting unit 52 transmits the handover indication not via the RRC signaling, that is, the RRC signaling does not include the handover indication, or transmits handover indication with a value of handover indication being a second specific value to the MTC UE via the RRC signaling, so that the MTC UE performs conventional cell handover according to the RRC signaling.

Wherein, the handover indication is carried via *MobilityControlInfo* information element of the RRC signaling.

Wherein, the *MobilityControlInfo* information element further includes: a carrier frequency resource and a bandwidth resource allocated for the MTC UE.

With the eNB of this embodiment, the eNB configures the frequency domain resource for the MTC UE, and the MTC UE may be quickly handed over to an operating frequency configured by the eNB for it, and normal communication may be performed.

An embodiment of the present invention further provides machine-type communication user equipment, as described in Embodiment 4 below. As the principle of the user equipment for solving problems is similar to that of the method in Embodiment 2, the implementation of the method in Embodiment 2 may be referred to for the implementation of the user equipment, and repeated parts shall not be described herein any further.

### Embodiment 4

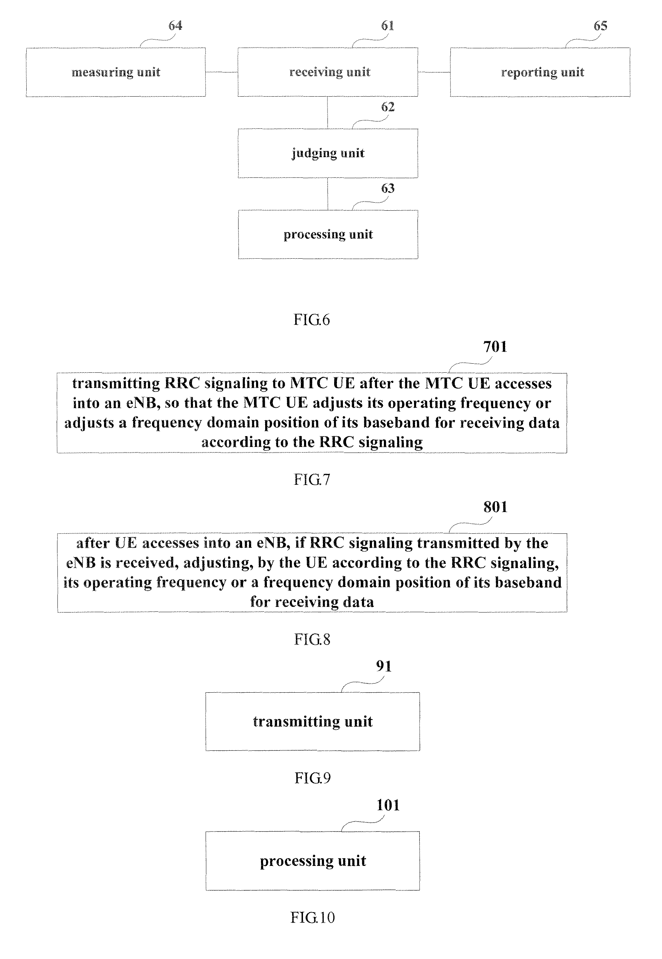

An embodiment of the present invention further provides machine-type communication user equipment. Fig. 6 is a schematic diagram of the structure of the user equipment. Referring to Fig. 6, the user equipment includes:
a receiving unit 61 configured to receive RRC signaling transmitted by an eNB;
a judging unit 62 configured to judge to perform conventional cell handover or frequency domain resource adjustment according to the RRC signaling; and
a processing unit 63 configured to perform conventional cell handover or frequency domain resource adjustment according to a judgment result of the judging unit.

Wherein, when the RRC signaling includes handover indication, or the RRC signaling includes handover indication with a value of handover indication being a first specific value, the judging unit 62 judges to perform frequency domain resource adjustment;
wherein, when the RRC signaling does not include handover indication, or the RRC signaling includes handover indication with a value of handover indication being a second specific value, the judging unit 62 judges to perform conventional cell handover.

Wherein, the handover indication is carried via *MobilityControlInfo* information element in the RRC signaling.

Wherein, the *MobilityControlInfo* information element further includes: a carrier frequency resource and a bandwidth resource allocated for the MTC UE.

Wherein, the processing unit 63 adjusts an operating frequency or adjusts a frequency domain location of a baseband for receiving data according to the carrier frequency resource, and determines an operational bandwidth according to the bandwidth resource.

In an implementation of this embodiment, the UE further includes:
a measuring unit 64 configured to perform cell measurement and report a measurement result according to a measurement request of the eNB.

Wherein, corresponding to the method of Embodiment 1, the eNB will configure the MTC UE to perform the cell measurement, so as to allocate the frequency domain resource for the MTC UE according to the measurement result, and the UE may further perform the cell measurement and report the measurement result according to the measurement request of the eNB.

In another implementation of this embodiment, the UE further includes:
a reporting unit 65 configured to report a supported maximum bandwidth to the eNB.

Wherein, corresponding to the method of Embodiment 1, the UE may further report the maximum bandwidth supported by itself to the eNB, so that the eNB allocates the operational bandwidth for the MTC UE with reference to the bandwidth information reported by the MTC UE.

Wherein, corresponding to the method of Embodiment 1, in performing the frequency domain resource adjustment, the UE may further reserve part of the configuration resource information of its source serving cell (an original frequency domain resource), such as time advance, wireless resource common configuration information, and random access dedicated configuration information, etc.

With the UE of this embodiment, the UE may be quickly handed over to an operating frequency configured by the eNB for it, and may perform communication using the parameters configured by the source serving eNB for it.

### Embodiment 5

An embodiment of the present invention further provides a method for configuring resource of machine-type communication. Fig. 7 is a flowchart of the method. Referring to Fig. 7, the method includes:
step 701: transmitting RRC signaling to MTC UE after the MTC UE accesses into an eNB, so that the MTC UE adjusts its operating frequency or adjusts a frequency domain position of its baseband for receiving data according to the RRC signaling;
   wherein the RRC signaling includes operating frequency indication information, the operating frequency indication information being used for indicating an operating frequency of the MTC UE, or the RRC signaling includes frequency domain position indication information, the frequency domain position indication information being used for indicating a frequency domain position of a baseband for receiving data of the MTC UE.

In this embodiment, a new RRC signaling is added without modifying a handover command to indicate the MTC UE to perform frequency domain resource adjustment.

In an embodiment, the newly-added RRC signaling includes operating frequency indication information, and the MTC UE determines its new operating frequency according to the information.

In another embodiment, the newly-added RRC signaling includes frequency domain location indication information, and the MTC UE determines a frequency domain position of a baseband for receiving data according to the information.

In a further embodiment, the newly-added RRC signaling includes operational bandwidth indication information, and the MTC UE determines its operational bandwidth according to the information.

In still another embodiment, the newly-added RRC signaling includes common wireless resource configuration information and dedicated wireless resource configuration information, such as configuration information of an ePDCCH, configuration information of a PUCCH, and configuration information of an SRS, etc. and the MTC UE performs normal communication according to these information.

Following are examples of contents included in the newly-added RRC signaling according to an implementation of the embodiment of the present invention:

```
Frea,uencylocation ::= SEQUENCE {
      dl-CarrierFreq ARFCN-ValueEUTRA
      ul-CarrierFreq ARFCN-ValueEUTRA OPTIONAL
      dl-Bandwidth ENUMERATED {
                                          n.6, n15, n25, spare13, spare12, spare11,
                                          spare10,
                                          spare9, spare8, spare7, spare6, spare5,
                                          spare4, spare3, spare2, spare1},
      u1-Bandwidth ENUMERATED {
                                          n6, n15, n25, spare13, spare12, spare11
                                          spare10,
                                          spare9, spare8, spare7, spare6, spare5,
                                          spare4, spare3, spare2, spare1}
  OPTIONAL
   } OPTIONAL,
  radioBesourceConfigCommonnewFreqency RadioResourceConfigConmonnewfreqency
   OPTIONAL
   radioResourceConfigDedicatednewfreqency RadioResourceConfigDedicatednewfreqency
   OPTIONAL
   }
```

With the method of this embodiment, the MTC UE may be quickly handed over to an operating frequency configured by the eNB for it, and may perform communication using the parameters configured by the source serving eNB for it.

### Embodiment 6

An embodiment of the present invention further provides a method for configuring resource of machine-type communication. Fig. 8 is a flowchart of the method. Referring to Fig. 8, the method includes:
step 801: after UE accesses into an eNB, if RRC signaling transmitted by the eNB is received, adjusting, by the UE according to the RRC signaling, its operating frequency or a frequency domain position of its baseband for receiving data;
   wherein the RRC signaling includes operating frequency indication information or frequency domain position indication information, the operating frequency indication information being used for indicating an operating frequency of the MTC UE, and the frequency domain position indication information being used for indicating a frequency domain position of a baseband for receiving data of the MTC UE.

In this embodiment, the eNB indicates the operating frequency or the frequency domain position of the MTC UE via newly-added RRC signaling, and the MTC UE determines its operating frequency or frequency domain position accordingly.

Corresponding to Embodiment 5, in an embodiment, the newly-added RRC signaling includes operating frequency indication information, and the MTC UE determines its new operating frequency according to the information (applicable to the MTC UE in the manner of reduction of the maximum bandwidth mentioned in the Background Art with the RF and baseband bandwidths being both reduced).

Corresponding to Embodiment 5, in another embodiment, the newly-added RRC signaling includes frequency domain location indication information, and the MTC UE determines a frequency domain position of a baseband for receiving data according to the information (applicable to the MTC UE in the manner of reduction of the maximum bandwidth mentioned in the Background Art with the baseband bandwidth being reduced but the baseband bandwidth of the data channel and the baseband bandwidth of the control channel being both reduced).

Corresponding to Embodiment 5, in a further embodiment, the newly-added RRC signaling includes operational bandwidth indication information, and the MTC UE determines its operational bandwidth according to the information.

Corresponding to Embodiment 5, in still another embodiment, the newly-added RRC signaling includes common wireless resource configuration information and dedicated wireless resource configuration information, such as configuration information of an ePDCCH, configuration information of a PUCCH, and configuration information of an SRS, etc. and the MTC UE performs normal communication according to these information.

With the method of this embodiment, the MTC UE may be quickly handed over to an operating frequency configured by the eNB for it, and may perform communication using the parameters configured by the source serving eNB for it.

An embodiment of the present invention further provides an eNB, as described in Embodiment 7 below. As the principle of the eNB for solving problems is similar to that of the method in Embodiment 5, the implementation of the method in Embodiment 5 may be referred to for the implementation of the eNB, and repeated parts shall not be described herein any further.

### Embodiment 7

An embodiment of the present invention further provides an eNB. Fig. 9 is a schematic diagram of the structure of the eNB. Referring to Fig. 9, the eNB includes:
a transmitting unit 91 configured to transmit RRC signaling to MTC UE after the MTC UE accesses into the eNB, so that the MTC UE adjusts its operating frequency or adjusts a frequency domain position of its baseband for receiving data according to the RRC signaling;
wherein the RRC signaling includes operating frequency indication information, the operating frequency indication information being used for indicating an operating frequency of the MTC UE, or the RRC signaling includes frequency domain position indication information, the frequency domain position indication information being used for indicating a frequency domain position of a baseband for receiving data of the MTC UE.

Wherein, the RRC signaling further includes operational bandwidth indication information, the operational bandwidth indication information being used for indicating an operational bandwidth of the MTC UE.

Wherein, the RRC signaling further includes common wireless resource configuration information and dedicated wireless resource configuration information.

With the eNB of this embodiment, the MTC UE may be quickly handed over to an operating frequency configured by the eNB for it, and may perform communication using the parameters configured by the source serving eNB for it.

An embodiment of the present invention further provides UE, as described in Embodiment 8 below. As the principle of the UE for solving problems is similar to that of the method in Embodiment 6, the implementation of the method in Embodiment 6 may be referred to for the implementation of the UE, and repeated parts shall not be described herein any further.

### Embodiment 8

An embodiment of the present invention further provides machine-type communication user equipment. Fig. 10 is a schematic diagram of the structure of the UE. Referring to Fig. 10, the UE includes:
a processing unit 101 configured to, after the UE accesses into an eNB, when RRC signaling transmitted by the eNB is received, adjust its operating frequency or a frequency domain position of its baseband for receiving data according to the RRC signaling;
wherein the RRC signaling includes operating frequency indication information or frequency domain position indication information, the operating frequency indication information being used for indicating an operating frequency of the MTC UE, and the frequency domain position indication information being used for indicating a frequency domain position of a baseband for receiving data of the MTC UE.

Wherein, the RRC signaling further includes operational bandwidth indication information, and the processing unit is further configured to determine its operational bandwidth according to the operational bandwidth indication information.

Wherein, the RRC signaling further includes common wireless resource configuration information and dedicated wireless resource configuration information.

With the UE of this embodiment, the UE may be quickly handed over to an operating frequency configured by the eNB for it, and may perform communication using the parameters configured by the source serving eNB for it.

### Embodiment 9

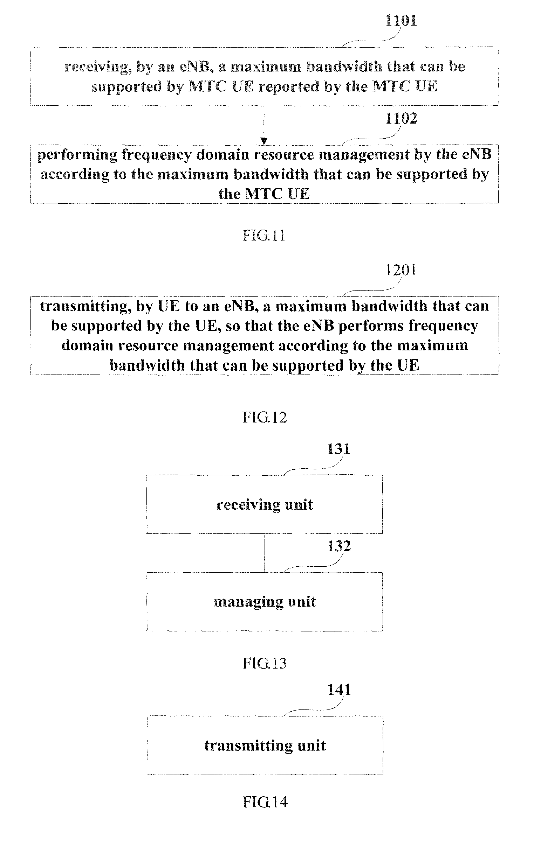

An embodiment of the present invention further provides a method for managing frequency domain resource of MTC. Fig. 11 is a flowchart of the method. Referring to Fig. 11, the method includes:
step 1101: receiving, by an eNB, a maximum bandwidth that can be supported by MTC UE reported by the MTC UE; and
step 1102: performing frequency domain resource management by the eNB according to the maximum bandwidth that can be supported by the MTC UE.

In this embodiment, the eNB performs the frequency domain resource management according to the maximum bandwidth that can be supported by the MTC UE, such as performing frequency domain resource allocation, operational bandwidth allocation, and UE scheduling management, etc., and this embodiment is not limited thereto.

With the method of this embodiment, the MTC UE may be quickly handed over to an operating frequency configured by the eNB for it, and may perform communication using the parameters configured by the source serving eNB for it.

### Embodiment 10

An embodiment of the present invention further provides a method for managing frequency domain resource of MTC. Fig. 12 is a flowchart of the method. Referring to Fig. 12, the method includes:
step 1201: transmitting, by MTC UE to an eNB, a maximum bandwidth that can be supported by the MCT UE, so that the eNB performs frequency domain resource management according to the maximum bandwidth that can be supported by the MTC UE.

With the method of this embodiment, the MTC UE may be quickly handed over to an operating frequency configured by the eNB for it, and may perform communication using the parameters configured by the source serving eNB for it.

### Embodiment 11

An embodiment of the present invention further provides an eNB. Fig. 13 is a schematic diagram of the structure of the eNB. Referring to Fig. 13, the eNB includes:
a receiving unit 131 configured to receive a maximum bandwidth that can be supported by MTC UE reported by the MTC UE; and
a managing unit 132 configured to perform frequency domain resource management according to the maximum bandwidth that can be supported by the MTC UE.

With the method of this embodiment, the MTC UE may be quickly handed over to an operating frequency configured by the eNB for it, and may perform communication using the parameters configured by the source serving eNB for it.

### Embodiment 12

An embodiment of the present invention further provides UE. Fig. 14 is a schematic diagram of the structure of the UE. Referring to Fig. 14, the UE includes:
a transmitting unit 141 configured to transmit to an eNB, a maximum bandwidth that can be supported by the MTC UE, so that the eNB performs frequency domain resource management according to the maximum bandwidth that can be supported by the MTC UE.

The UE in this embodiment may be MTC UE, and with the method of this embodiment, the MTC UE may be quickly handed over to an operating frequency configured by the eNB for it, and may perform communication using the parameters configured by the source serving eNB for it.

An embodiment of the present invention further provides a communication system, including the eNB as described in Embodiment 3 and the UE as described in Embodiment 4.

An embodiment of the present invention further provides a communication system, including the eNB as described in Embodiment 7 and the UE as described in Embodiment 8.

An embodiment of the present invention further provides a communication system, including the eNB as described in Embodiment 11 and the UE as described in Embodiment 12.

An embodiment of the present invention further provides a computer-readable program, wherein when the program is executed in an eNB, the program enables a computer to carry out the method for configuring resource of machine-type communication as described in Embodiment 1 or 5 or the method for managing frequency domain resource of MTC as described in Embodiment 11 in the eNB.

An embodiment of the present invention further provides a storage medium in which a computer-readable program is stored, wherein the computer-readable program enables a computer to carry out the method for configuring resource of machine-type communication as described in Embodiment 1 or 5 or the method for managing frequency domain resource of MTC as described in Embodiment 11 in an eNB.

An embodiment of the present invention further provides a computer-readable program, wherein when the program is executed in terminal equipment, the program enables a computer to carry out the method for configuring resource of machine-type communication as described in Embodiment 2 or 6 or the method for managing frequency domain resource of MTC as described in Embodiment 12 in the terminal equipment.

An embodiment of the present invention further provides a storage medium in which a computer-readable program is stored, wherein the computer-readable program enables a computer to carry out the method for configuring resource of machine-type communication as described in Embodiment 2 or 6 or the method for managing frequency domain resource of MTC as described in Embodiment 12 in terminal equipment.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.
domain resource change within the cell system bandwidth by whether adding a new field (referred to as "handover indication" in this embodiment, the same below) into the RRC signaling; for example, if a new field is added into the RRC signaling, it shows that the handover command is a frequency domain resource change within the cell system bandwidth, and the MTC UE performs frequency domain resource adjustment according to the RRC signaling; and if a new field is not added into the RRC signaling, it shows that the handover command is conventional handover, and the MTC UE performs conventional cell handover according to the RRC signaling;
in another implementation of step 202, the eNB indicates to the MTC UE whether the handover command (the RRC signaling) is conventional handover or a frequency domain resource change within the cell system bandwidth by a value of a new field added into the RRC signaling. For example, if the value of the new field is a first specific value (such as "1"), it shows that the handover command is a frequency domain resource change within the cell system bandwidth, and the MTC UE performs frequency domain resource adjustment according to the RRC signaling; and if the value of the new field is a second specific value (such as "0" or a default value), it shows that the handover command is conventional handover, and the MTC UE performs conventional cell handover according to the RRC signaling.

In this embodiment, the handover indication may be carried via a *MobilityControlInfo* information element of the RRC signaling. And the *MobilityControlInfo* information element may further include a carrier frequency resource and a bandwidth resource allocated for the MTC UE, so that the MTC UE performs frequency domain resource adjustment accordingly.

Following are examples of contents included in the *MobilityControlInfo* information element according to an implementation of the embodiment of the present invention:

```
 -- ASN1START
 MobilityControlInfo ::= SEQUENCE {
    targetPhysCellId PhysCellId,
    carrierFreq CarrierFreqEUTRA OPTIONAL,
  - Cond HO-toEUTRA
    carrierBandwidth CarrierBandwidthEUTRA OPTIONAL,
 - Cond HO-toEUTRA
    additionalSpectrumEmission AdditionalSpectrumEmission OPTIONAL,
 -- Cond HO-toEUTRA
    t304 ENUMERATED {
                                        ms50, ms100, ms150, ms200, ms500, ms1000,
                                        ms2000, spare1},
    newUE-Identity C-RNTI,
    radioResourceConfigCommon RadioResourceConfigCommon,
    rach-ConfigDedicated RACH-ConfigDedicated OPTIONAL,
 - Need OP
    New indication Frequencylocationflag OPTIONAL,
 - Need OP
 }
 CarrierBandwidthEUTRA ::= SEQUENCE {
    dl-Bandwidth ENUMERATED {
                                            n6, n15, n25, n50, n75, n100, spare10,
                                            spare9, spare8, spare7, spare6, spare5,
                                            spare4, spare3, spare2, spare1},
    ul-Bandwidth ENUMERATED {
                                            n6, n15, n25, n50, n75, n100, spare10,
                                            spare9, spare8, spare7, spare6, spare5,
                                            spare4, spare3, spare2, spare1}
    OPTIONAL -- Need OP
 }
 CarrierFreqEUTRA ::= SEQUENCE {
    dl-CarrierFreq ARFCN-ValueEUTRA,
    ul-CarrierFreq ARFCN-ValueEUTRA OPTIONAL --
 Cond FDD
 }
 -- ASN1STOP
```

Wherein, "new indication" is the new field (referred to as a newly-added field) added into the *MobilityControlInfo* information element of the RRC signaling of the embodiment of the present invention, which indicates via "frequencylocationflag" whether conventional handover or frequency domain resource adjustment is performed.

The eNB allocates a frequency domain resource for the MTC UE by using the
step 701: transmitting RRC signaling to MTC UE after the MTC UE accesses into an eNB, so that the MTC UE adjusts its operating frequency or adjusts a frequency domain position of its baseband for receiving data according to the RRC signaling;
   wherein the RRC signaling includes operating frequency indication information, the operating frequency indication information being used for indicating an operating frequency of the MTC UE, or the RRC signaling includes frequency domain position indication information, the frequency domain position indication information being used for indicating a frequency domain position of a baseband for receiving data of the MTC UE.

In this embodiment, a new RRC signaling is added without modifying a handover command to indicate the MTC UE to perform frequency domain resource adjustment.

In an embodiment, the newly-added RRC signaling includes operating frequency indication information, and the MTC UE determines its new operating frequency according to the information.

In another embodiment, the newly-added RRC signaling includes frequency domain location indication information, and the MTC UE determines a frequency domain position of a baseband for receiving data according to the information.

In a further embodiment, the newly-added RRC signaling includes operational bandwidth indication information, and the MTC UE determines its operational bandwidth according to the information.

In still another embodiment, the newly-added RRC signaling includes common wireless resource configuration information and dedicated wireless resource configuration information, such as configuration information of an ePDCCH, configuration information of a PUCCH, and configuration information of an SRS, etc. and the MTC UE performs normal communication according to these information.

Following are examples of contents included in the newly-added RRC signaling according to an implementation of the embodiment of the present invention:

```
Frequencylocation ::= SEQUENCE {
       dl-CarrierFreq ARFCN-ValueEUTRA
        ul-CarrierFreq ARFCN-ValueEUTRA OPTIONAL
       dl-Bandwidth ENUMERATED {
                                            n6, n15, n25, spare13, spare12, spare11,
 spare10,
                                            spare9, spare8, spare7, spare6, spares,
                                            spare4, spare3, spare2, spare1},
       ul-Bandwidth ENUMERATED {
                                            n6, n15, n25, spare13, spare12, spare11
 spare10,
                                            spare9, spare8, spare7, spare6, spare5,
                                            spare4, spare3, spare2, spare1}
    OPTIONAL
    } OPTIONAL,
    radioResourceConfigCommonnewfreqency RadioResourceConfigCommonnewfreqency
    OPTIONAL
    radioResourceConfigDedicatednewfreqency RadioResourceConfigDedicatednewfreqency
    OPTIONAL
 }
```

With the method of this embodiment, the MTC UE may be quickly handed over to an operating frequency configured by the eNB for it, and may perform communication using the parameters configured by the source serving eNB for it.

### Embodiment 6

An embodiment of the present invention further provides a method for configuring resource of machine-type communication. Fig. 8 is a flowchart of the method. Referring to Fig. 8, the method includes:
step 801: after UE accesses into an eNB, if RRC signaling transmitted by the eNB is received, adjusting, by the UE according to the RRC signaling, its operating frequency or a frequency domain position of its baseband for receiving data;
   wherein the RRC signaling includes operating frequency indication information or frequency domain position indication information, the operating frequency indication information being used for indicating an operating frequency of the MTC UE, and the frequency domain position indication information being used for indicating a frequency domain position of a baseband for receiving data of the MTC UE.

## Claims

1. A method for configuring resource of machine-type communication (MTC), compri sing:
allocating a frequency domain resource by an eNB for MTC UE accessed into the eNB; and
transmitting RRC signaling by the eNB to the MTC UE according to the frequency domain resource allocated for the MTC UE, so that the MTC UE determines to perform conventional cell handover or frequency domain resource adjustment according to the RRC signaling.

2. The method according to claim 1, wherein the method further comprises:
transmitting a measurement request by the eNB to the MTC UE and receiving a measurement result reported by the MTC UE, so as to allocate the frequency domain resource for the MTC UE according to the measurement result.

3. The method according to claim 1, wherein the method further comprises:
receiving, by the eNB, a maximum bandwidth supported by the MTC UE that is reported by the MTC UE, so as to allocate an operational bandwidth for the MTC UE with reference to the maximum bandwidth supported by the MTC UE in allocating the frequency domain resource for the MTC UE.

4. The method according to claim 1, wherein,
if a central frequency of the frequency domain resource allocated by the eNB for the MTC UE is not a central frequency of a system bandwidth, the eNB transmits RRC signaling including handover indication to the MTC UE, or transmits RRC signaling including handover indication with a value of handover indication being a first specific value to the MTC UE, so that the MTC UE determines to perform frequency domain resource adjustment according to the RRC signaling.

5. The method according to claim 4, wherein,
if the central frequency of the frequency domain resource allocated by the eNB for the MTC UE is the central frequency of the system bandwidth, the eNB transmits RRC signaling not including the handover indication to the MTC UE, or transmits RRC signaling including handover indication with a value of handover indication being a second specific value to the MTC UE, so that the MTC UE determines to perform conventional cell handover according to the RRC signaling.

6. The method according to claim 4 or 5, wherein the handover indication is carried via *MobilityControlInfo* information element of the RRC signaling.

7. The method according to claim 6, wherein the *MobilityControlInfo* information element further comprises: a carrier frequency resource and a bandwidth resource allocated for the MTC UE.

8. A method for configuring resource of machine-type communication (MTC), comprising:
receiving, by UE, RRC signaling transmitted by an eNB;
judging, by the UE according to the RRC signaling, whether to perform conventional cell handover or frequency domain resource adjustment; and
performing conventional cell handover or frequency domain resource adjustment by the UE according to a judgment result.

9. The method according to claim 8, wherein the method further comprises:
performing cell measurement and reporting a measurement result by the UE according to a measurement request of the eNB, so that the eNB allocates a frequency domain resource for the UE according to the measurement result.

10. The method according to claim 8, wherein the method further comprises:
reporting, by the UE to the eNB, a maximum bandwidth that can be supported by the UE, so that the eNB allocates an operational bandwidth for the UE with reference to the maximum bandwidth that can be supported by the UE in allocating the frequency domain resource for the UE.

11. The method according to claim 8, wherein,
if a handover indication is included in the RRC signaling, or a handover indication with a value of handover indication being a first specific value is included in the RRC signaling, the UE judges that frequency domain resource adjustment needs to be performed.

12. The method according to claim 8, wherein,
if a handover indication is not included in the RRC signaling, or a handover indication with a value of handover indication being a second specific value is included in the RRC signaling, the UE judges that conventional cell handover needs to be performed.

13. The method according to claim 11 or 12, wherein the handover indication is carried via *MobilityControlInfo* information element in the RRC signaling.

14. The method according to claim 13, wherein the *MobilityControlInfo* information element further comprises: a carrier frequency resource and a bandwidth resource allocated for the UE.

15. The method according to claim 14, wherein the step of performing the frequency domain resource adjustment by the UE according to the RRC signaling comprises:
adjusting an operating frequency or adjusting a frequency domain position of a baseband for receiving data by the UE according to the carrier frequency resource, and determining an operational bandwidth according to the bandwidth resource.

16. The method according to claim 8, wherein the UE reserves timing advance information of its source serving cell when a judgment result is that the frequency domain resource adjustment needs to be performed, and determines its initial uplink transmission time after being adjusted to a new frequency domain resource according to the timing advance information.

17. The method according to claim 8, wherein the UE reserves wireless resource common configuration information and/or random access dedicated configuration information of its source serving cell when a judgment result is that the frequency domain resource adjustment needs to be performed.

18. An eNB, comprising:
an allocating unit configured to allocate a frequency domain resource for MTC UE accessed into the eNB; and
a transmitting unit configured to transmit RRC signaling to the MTC UE according to the frequency domain resource allocated for the MTC UE, so that the MTC UE determines to perform conventional cell handover or frequency domain resource adjustment according to the RRC signaling.

19. The eNB according to claim 18, wherein the eNB further comprises:
a configuring unit configured to transmit a measurement request to the MTC UE and receive a measurement result reported by the MTC UE, so that the allocating unit allocates the frequency domain resource for the MTC UE according to the measurement result.

20. The eNB according to claim 18, wherein the eNB further comprises:
a receiving unit configured to receive a maximum bandwidth supported by the MTC UE that is reported by the MTC UE, so that the allocating unit allocates an operational bandwidth for the MTC UE with reference to the maximum bandwidth supported by the MTC UE in allocating the frequency domain resource for the MTC UE.

21. The eNB according to claim 18, wherein,
when a central frequency of the frequency domain resource allocated by the allocating unit for the MTC UE is not a central frequency of a system bandwidth, the transmitting unit transmits RRC signaling including handover indication to the MTC UE, or transmits RRC signaling including handover indication with a value of handover indication being a first specific value to the MTC UE, so that the MTC UE determines to perform frequency domain resource adjustment according to the RRC signaling.

22. The eNB according to claim 21, wherein,
when the central frequency of the frequency domain resource allocated by the allocating unit for the MTC UE is the central frequency of the system bandwidth, the transmitting unit transmits RRC signaling not including the handover indication to the MTC UE, or transmits RRC signaling including handover indication with a value of handover indication being a second specific value to the MTC UE, so that the MTC UE determines to perform conventional cell handover according to the RRC signaling.

23. The eNB according to claim 21 or 22, wherein the handover indication is carried via *MobilityControlInfo* information element of the RRC signaling.

24. The eNB according to claim 23, wherein the *MobilityControlInfo* information element further comprises: a carrier frequency resource and a bandwidth resource allocated for the MTC UE.

25. Machine-type communication user equipment (MTC UE), comprising:
a receiving unit configured to receive RRC signaling transmitted by an eNB;
a judging unit configured to judge to perform conventional cell handover or frequency domain resource adjustment according to the RRC signaling; and
a processing unit configured to perform conventional cell handover or frequency domain resource adjustment according to a judgment result of the judging unit.

26. The UE according to claim 25, wherein the UE further comprises:
a measuring unit configured to perform cell measurement and report a measurement result according to a measurement request of the eNB, so that the eNB allocates a frequency domain resource for the UE according to the measurement result.

27. The UE according to claim 25, wherein the UE further comprises:
a reporting unit configured to report to the eNB a maximum bandwidth that can be supported by the UE, so that the eNB allocates an operational bandwidth for the UE with reference to the maximum bandwidth that can be supported by the UE in allocating the frequency domain resource to the UE.

28. The UE according to claim 25, wherein,
when a handover indication is included in the RRC signaling, or a handover indication with a value of handover indication being a first specific value is included in the RRC signaling, the judging unit judges to perform frequency domain resource adjustment;
and the processing unit performs the frequency domain resource adjustment according to the judgment result of the judging unit.

29. The UE according to claim 25, wherein,
when a handover indication is not included in the RRC signaling, or a handover indication with a value of handover indication being a second specific value is included in the RRC signaling, the judging unit judges to perform conventional cell handover;
and the processing unit performs the conventional cell handover according to the judgment result of the judging unit.

30. The UE according to claim 28 or 29, wherein the handover indication is carried via *MobilityControlInfo* information element in the RRC signaling.

31. The UE according to claim 30, wherein the *MobilityControlInfo* information element further comprises: a carrier frequency resource and a bandwidth resource allocated for the MTC UE.

32. The UE according to claim 31, wherein,
the processing unit adjusts an operating frequency or adjusts a frequency domain position of a baseband for receiving data according to the carrier frequency resource, and determines an operational bandwidth according to the bandwidth resource of the MTC UE.

33. The UE according to claim 25, wherein the processing unit reserves timing advance information of its source serving cell when the judgment result of the judging unit is that the frequency domain resource adjustment needs to be performed, and determines its initial uplink transmission time after being adjusted to a new frequency domain resource according to the timing advance information.

34. The UE according to claim 33, wherein the processing unit reserves wireless resource common configuration information and/or random access dedicated configuration information of its source serving cell when a judgment result of the judging unit is that the frequency domain resource adjustment needs to be performed.

35. A method for configuring resource of machine-type communication (MTC), comprising:
transmitting RRC signaling to MTC UE after the MTC UE accesses into an eNB, so that the MTC UE adjusts its operating frequency or adjusts a frequency domain position of its baseband for receiving data according to the RRC signaling;
wherein the RRC signaling comprises operating frequency indication information, the operating frequency indication information being used for indicating an operating frequency of the MTC UE, or the RRC signaling comprises frequency domain position indication information, the frequency domain position indication information being used for indicating a frequency domain position of a baseband for receiving data of the MTC UE.

36. The method according to claim 35, wherein the RRC signaling further comprises operational bandwidth indication information, the operational bandwidth indication information being used for indicating an operational bandwidth of the MTC UE.

37. The method according to claim 35, wherein the RRC signaling further comprises common wireless resource configuration information and dedicated wireless resource configuration information.

38. A method for configuring resource of machine-type communication, comprising:
after UE accesses into an eNB, if RRC signaling transmitted by the eNB is received, adjusting, by the UE according to the RRC signaling, its operating frequency or a frequency domain position of its baseband for receiving data;
wherein the RRC signaling comprises operating frequency indication information or frequency domain position indication information, the operating frequency indication information being used for indicating an operating frequency of the MTC UE, and the frequency domain position indication information being used for indicating a frequency domain position of a baseband for receiving data of the MTC UE.

39. The method according to claim 38, wherein the RRC signaling further comprises operational bandwidth indication information, and the method further comprises:
determining, by the UE, its operational bandwidth according to the operational bandwidth indication information.

40. The method according to claim 38, wherein the RRC signaling further comprises common wireless resource configuration information and dedicated wireless resource configuration information.

41. An eNB, comprising:
a transmitting unit configured to transmit RRC signaling to MTC UE after the MTC UE accesses into the eNB, so that the MTC UE adjusts its operating frequency or adjusts a frequency domain position of its baseband for receiving data according to the RRC signaling;
wherein the RRC signaling comprises operating frequency indication information, the operating frequency indication information being used for indicating an operating frequency of the MTC UE, or the RRC signaling comprises frequency domain position indication information, the frequency domain position indication information being used for indicating a frequency domain position of a baseband for receiving data of the MTC UE.

42. The eNB according to claim 41, wherein the RRC signaling further comprises operational bandwidth indication information, the operational bandwidth indication information being used for indicating an operational bandwidth of the MTC UE.

43. The eNB according to claim 41, wherein the RRC signaling further comprises common wireless resource configuration information and dedicated wireless resource configuration information.

44. Machine-type communication user equipment (MTC UE), comprising:
a processing unit configured to, after the UE accesses into an eNB, when RRC signaling transmitted by the eNB is received, adjust its operating frequency or a frequency domain position of its baseband for receiving data according to the RRC signaling;
wherein the RRC signaling comprises operating frequency indication information or frequency domain position indication information, the operating frequency indication information being used for indicating an operating frequency of the MTC UE, and the frequency domain position indication information being used for indicating a frequency domain position of a baseband for receiving data of the MTC UE.

45. The UE according to claim 44, wherein the RRC signaling further comprises operational bandwidth indication information, and the processing unit is further configured to determine its operational bandwidth according to the operational bandwidth indication information.

46. The UE according to claim 44, wherein the RRC signaling further comprises common wireless resource configuration information and dedicated wireless resource configuration information.

47. A method for managing frequency domain resource of MTC, comprising:
receiving, by an eNB, a maximum bandwidth that can be supported by MTC UE reported by the MTC UE; and
performing frequency domain resource management by the eNB according to the maximum bandwidth that can be supported by the MTC UE.

48. A method for managing frequency domain resource of MTC, comprising:
transmitting, by UE to an eNB, a maximum bandwidth that can be supported by the UE, so that the eNB performs frequency domain resource management according to the maximum bandwidth that can be supported by the UE.

49. An eNB, comprising:
a receiving unit configured to receive a maximum bandwidth that can be supported by MTC UE reported by the MTC UE; and
a managing unit configured to perform frequency domain resource management according to the maximum bandwidth that can be supported by the MTC UE.

50. UE, comprising:
a transmitting unit configured to transmit to an eNB, a maximum bandwidth that can be supported by the UE, so that the eNB performs frequency domain resource management according to the maximum bandwidth that can be supported by the UE.

51. A communication system, comprising the eNB as claimed in any one of claims 18-24 and the UE as claimed in any one of claims 25-34, or comprising the eNB as claimed in any one of claims 41-43 and the UE as claimed in any one of claims 44-46, or comprising the eNB as claimed in claim 49 and the UE as claimed in claim 50.

52. A computer-readable program, wherein when the program is executed in an eNB, the program enables a computer to carry out the method for configuring resource of machine-type communication as claimed in any one of claims 1-7 and 35-37 in the eNB, or the program enables a computer to carry out the method for managing frequency domain resource of MTC as claimed in claim 47 in the eNB.

53. A storage medium in which a computer-readable program is stored, wherein the computer-readable program enables a computer to carry out the method for configuring resource of machine-type communication as claimed in any one of claims 1-7 and 35-37 in an eNB, or the program enables a computer to carry out the method for managing frequency domain resource of MTC as claimed in claim 47 in an eN B.

54. A computer-readable program, wherein when the program is executed in terminal equipment, the program enables a computer to carry out the method for configuring resource of machine-type communication as claimed in any one of claims 8-17 and 38-40 in the terminal equipment, or the program enables a computer to carry out the method for managing frequency domain resource of MTC as claimed in claim 48 in the terminal equipment.

55. A storage medium in which a computer-readable program is stored, wherein the computer-readable program enables a computer to carry out the method for configuring resource of machine-type communication as claimed in any one of claims 8-17 and 38-40 in terminal equipment, or the program enables a computer to carry out the method for managing frequency domain resource of MTC as claimed in claim 48 in terminal equipment.
